# EUROPEAN PATENT SPECIFICATION

(11) **EP 3 091 209 B1**
(45) Date of publication and mention of the grant of the patent: **19.12.2018**
(21) Application number: 16168354.5
(22) Date of filing: 04.05.2016
(51) Int. Cl.: F02B 37/00, F02B 37/013, F02D 41/00, F16K 1/22, F02B 33/40, F16K 31/126, F02B 37/16, F02B 37/12

(54) **METHOD OF ACTUATING A BY-PASS VALVE**
VERFAHREN ZUR BETÄTIGUNG EINES UMGEHUNGSVENTILS
PROCÉDÉ D'ACTIONNEMENT D'UNE SOUPAPE DE DÉRIVATION

(30) Priority: 06.05.2015 GB 201507712
(43) Date of publication of application: 09.11.2016
(73) Proprietor: Delphi International Operations Luxembourg S.à r.l., 4940 Bascharage (LU)
(72) Inventor: Bart, SCHREURS, 6700 WALTZING (BE); Michel, PETERS, 1135 LUXEMBOURG (LU)
(74) Representative: Delphi France SAS

(56) References cited:
- DE-A1-102008 051 453
- DE-A1-102012 019 896
- DE-A1-102012 212 555
- US-A- 4 930 315
- US-A- 5 063 744
- US-A1- 2006 137 342
- US-A1- 2015 083 094

## Description

### Field of the Invention

This disclosure relates to a method of operating a by-pass valve and has particular but not exclusive application to by-pass valve operation in turbocharged engine systems. It is applicable particularly to engine systems which have twin (two-stage) turbo charger systems.

### Background of the Invention

Two-stage turbo systems generally comprise high pressure and low pressure turbos each with compressor stages. The high pressure compressor stage is typically bypassed once the low pressure compressor can provide enough boost pressure on its own. By-passing the high pressure compressor stage when it is not needed anymore makes such engine systems more efficient.

The by-pass operation can be provided by using a passive compressor bypass valve. Such valves generally comprise a spring controlled high flow one-way valve, where the spring urges the valve to a closed position, until the pressure difference across the valve exceeds the spring force and causes the valve to open. Alternatively, by-pass can be provided by an "active" controlled by-pass valve (e.g. a swing valve controlled with a pneumatic or electric actuator), and whereby the actuator is positively actuated so as to force the valve into either open or closed positions.

There exists in principle two methods of determining when the active controlled bypass valve should be opened in a twin turbo system to by-pass the high pressure compressor stage. In a simple method, a pressure sensor is used which is typically located between the high pressure and low pressure compressors. When the low pressure compressor outlet pressure (P21) becomes higher or equal to the high pressure compressor outlet pressure (P2), the compressor bypass valve can be switched open.

The second method is to model the outlet pressure of the low pressure compressor (P21) and use the modelled pressure instead of the measured pressure to decide when the bypass valve should be opened (this is a cheaper method, no pressure sensor required)

When the modelled pressure is used, problems can occur. If the modelled low pressure compressor outlet pressure is higher than the actual value, the compressor bypass is opened too early which results in a sudden drop in boost pressure and potentially leads to drivability issues.

If the modelled pressure is lower than the actual value, the compressor bypass valve is opened too late which results in operating with suboptimal efficiency.

A passive compressor bypass system does not have these types of issues, but the use of an active compressor bypass valve is often preferred for two reasons: The disadvantage of a passive bypass valve is the fact that there remains always a small pressure drop when the valve is open because a minimum pressure difference is required to overcome the spring pressure of the one way valve. Further the compressor bypass is preferably forced closed under certain conditions during DPF regeneration where a passive system would be open. This can give some benefits in respect to temperature increase in the exhaust line.

German Patent Application DE 102012019896 describes a method of controlling a twin turbocharger system based on pressure in said system. US Patent Application US 5063744 describes a method of operating a diaphragm actuator of intake and exhaust bypass valves in a two-stage turbocharger system. German Patent Application DE 102008051453 A1 describes a by-pass valve of a turbocharger system.

It is an object of the invention to provide an improved method of controlling an active by-pass valve.

### Statement of the Invention

According to one aspect is provided a method of controlling a by-pass valve in an engine system, said engine system comprising at least a low pressure turbocharger and a high pressure turbocharger, said by-pass valve being located between the compressor stages of the low and high pressure turbochargers, said by-pass valve including a movable actuator/member, arranged so as to selectively divert intake air through, or by-pass, the high pressure compressor stage, wherein the by-pass valve comprises a cylinder or chamber, including a movable piston/diaphragm/membrane located therein, which is attached to said movable actuator, and urged to a first position by a spring means and to the opposite position by application of pressure or vacuum to said chamber; and. wherein the movable actuator/member is controlled by adjusting the pressure/vacuum to provide a force against a spring means;
wherein in an active mode the actuator/member is controlled so as to forcibly be moved to and from open and closed positions so as to divert said flow in the valve, said method including operating said by-pass valve in a passive mode; wherein, in the passive mode, the pressure/vacuum applied to said chamber is made to provide a counter force substantially equal to the spring force such that the net pressure acting on the movable member being the difference in pressure between the high pressure compressor outlet pressure (P2) and the low pressure compressor outlet pressure (P21); characterized wherein said method includes switching the operation of said by-pass valve from a first active mode phase where the by-pass valve is forced closed, to a second phase where the by-pass valve is operated in said passive mode, and then to a subsequent third phase where the valve is operated in an active mode where the by-pass valve is forced open.

The transition from first active phase to said second passive phase may be consequent to the transition from non-operational to operational state of the low pressure turbo/compressor.

The method may include switching said by-pass valve from an active mode to a passive mode when a measured or estimated pressure in the intake between the turbochargers reaches a certain value or reaches within a threshold level from the demand boost pressure.

The first position may be the by-pass valve closed position and said opposite position the by-pass valve open position.

The vacuum may be controlled by varying the duty cycle of the applied pressure vacuum.

The by-pass valve may be temporarily operated in said passive mode phase and switched back to active mode operation.

The invention combines the benefits of a passive compressor bypass system with the benefits of an active compressor bypass system and overcomes the disadvantages linked to the use of an active compressor bypass valve.

### Brief Description of Drawings

The invention will now be described by way of example and with reference to the following drawings of which:
Figure 1 shows a schematic representation of a dual (twin stage) turbo system;
Figure 2 shows a portion of the figure 1 representation in more detail;
Figure 3 shows a schematic representation similar to figure 2 including further detail of a bypass valve;
Figure 4 shows a force diagram;
Figure 5 shows a chart showing various parameters of pressure against time;
Figure 6 illustrates the region in which the by-pass valve is preferably operated in the passive mode; and
Figure 7 shows the respective active and passive periods.

### Detailed Description

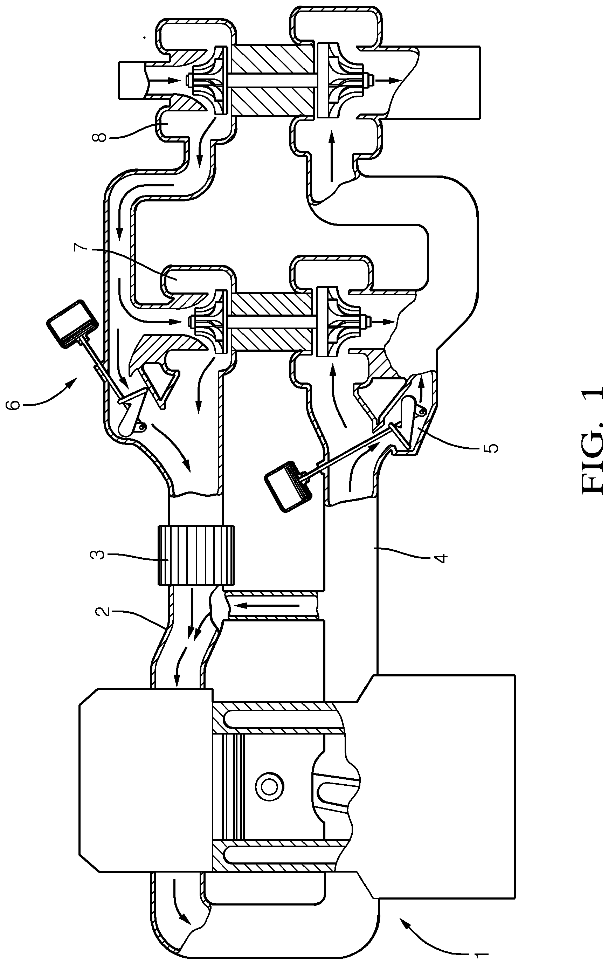

Figure 1 shows a schematic representation of a dual (twin stage) turbo system. An engine 1 is provided with air via intake 2, optionally via an air cooler 3. This air can be provided by one or both of a high pressure turbocharger stage 7 and a low pressure turbocharger stage 8.

The turbo-chargers are powered via exhaust gases exiting from the exhaust manifold 4. A wastegate 5 may control the exhaust flow through the high-pressure turbocharger turbine. This allows to regulate the air flow through the high and low pressure compressors .

A by-pass valve 6 is shown. This allows intake air to be diverted through the high pressure compressor or conversely allows air to by-pass the high pressure compressor.

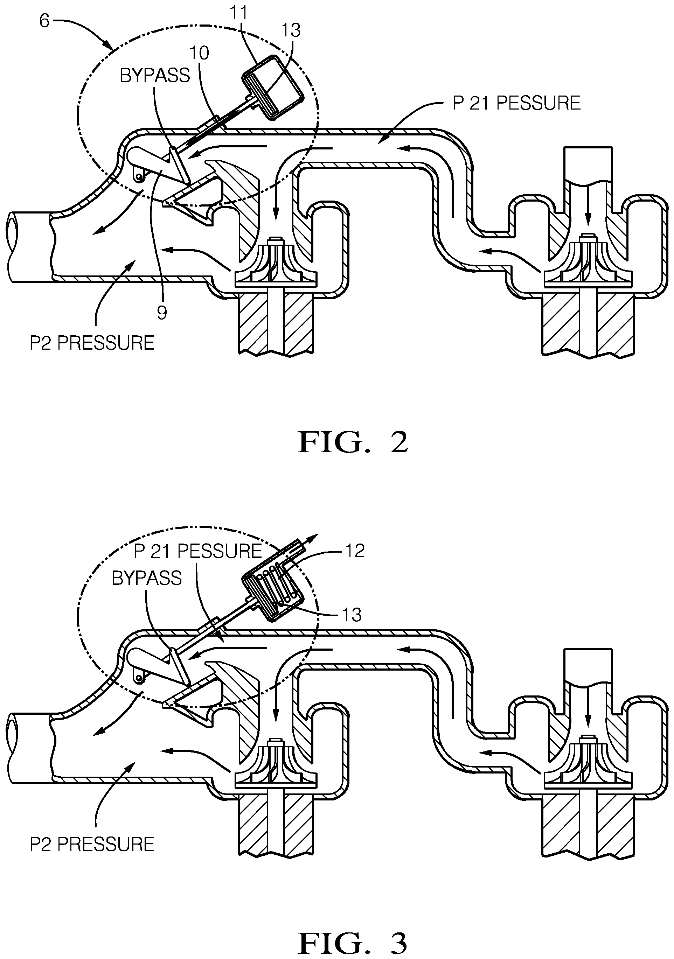

Figure 2 shows a portion of the figure 1 representation in more detail. The by-bass valve 6 may be such that a movable member such as a flap 9 can be moved e.g. from a first position (which generally causes flow to go through the high pressure compressor) to a second position where air is diverted so as to by-pass the compressor.

In the valve shown, the movable member is actuated by a rod or other actuator 10 adapted to move generally along a longitudinal axis. One end of the rod is connected to a diaphragm or piston 13 located in a cylinder 11 as shown in more detail of figure 3. A spring 12 located in the cylinder acts to urge the rod, and so move the flap to a position to cause air to bypass the high pressure turbocharger compressor. Means are provided to provide a vacuum on the spring portion of the cylinder/chamber so as to move the rod in a direction along its longitudinal axis so as to actuate the member so as to force air to flow through the high pressure turbo. The mechanism can also be designed such that the default position of the flap (no vacuum applied) forces the air to flow through the high pressure compressor.

The actuation of the rod and thus the movable member (flap) and consequently the diversion of intake air are controlled in one direction by the spring force, and in another by the negative (vacuum) force acting on the diaphragm/piston. The actuator of the compressor bypass system is usually a vacuum controlled pneumatic actuator. The pneumatic actuator includes a spring loaded membrane/diaphragm or piston.

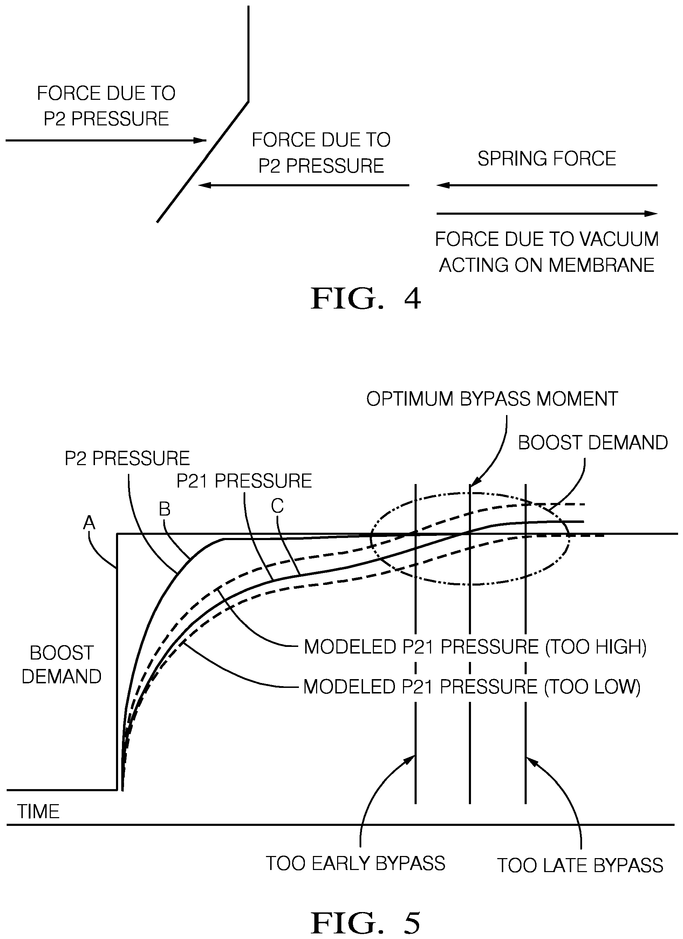

The forces acting on such a by-pass valve are shown diagrammatically as a force diagram in figure 4. Without any vacuum applied on the membrane, the spring forces the state of the compressor bypass valve either open or closed depending on the hardware setup. If the high pressure compressor outlet pressure (P2) is higher than the low pressure compressor outlet pressure (P21) and the compressor bypass valve is closed, the pressure difference (P2 - P21) pushes the compressor bypass valve even more into its seat ensuring a good sealed closure of the valve.

Active compressor bypass valves are normally controlled either fully open or fully closed by applying no or full vacuum to the actuator. This is done by outputting a duty cycle of 0% or 100% (or two other discrete duty cycle values) to an electro-pneumatic valve which controls the vacuum to the actuator. The electro-pneumatic valve can also be controlled with a discrete output which turns the current through the electro-pneumatic valve solenoid on or off.

Figure 5 shows a chart showing various parameters of pressure against time, during the transition from using the high pressure compressor to by-passing the high pressure compressor. It is assumed that initially only the high pressure turbocharger is operational. The line A shows the boost demand pressure and this is increased by a fixed amount, e.g. as determined by the ECU of the engine as a result to foot-down conditions. As a result the low pressure turbine becomes operational (e.g. by controlling the wastegate).

The figure shows the actual P2 pressure (line B) and the actual P21 pressure (lineC). The pressure P2 ramps up rapidly after the low pressure turbine becomes operational. During this time both compressors (turbos) are operational. However once the low pressure compressor generates sufficient pressure it is uneconomical to run both compressors (the high pressure turbo starts to act like a flow restriction) and so at some stage the high pressure turbo needs to be de-activated. This is performed by opening the compressor by-pass valve so that air flows generally through the valve and not via the high pressure compressor.

The timing and manner of the closing of the by-pass valve is very important. It is important in order to provide optimum efficiency and/or provide the required performance and/or turbocharger protection requirements.

This problem is made more difficult by errors between the actual and the modelled values of P21 pressure.

The upper and lower broken lines show extremes (errors) of the modelled P21 pressure. Due to inherent inaccuracy the modelled P21, pressure may be higher or lower than the actual pressure. Such discrepancies may also occur with a physical pressure sensor.

In one scenario for optimum performance the point at which the by-pass valve is switched is shown in the figure at point X when the P21 pressure reaches the P2 pressure. Of course, in varying scenarios this "optimum" point may be varied according to requirements. Often the valve is opened slightly later than when P21 reaches P2 for enhancing the robustness of the boost control (although this may have a small negative effect on efficiency). However, as mentioned errors in the measured or modelled P21 pressure means that the by-pass valve is often switched too early or too late.

In a simple embodiment, with the by-pass valve in a state where it is closed, and the high pressure turbo is running, there is an increase in demand for boost pressure and the low pressure turbo becomes operational. The by-pass valve is operated such that, after activation of the low pressure turbo, when the estimated P21 pressure rises to close within the demand pressure i.e. within a certain threshold (i.e. less than or equal to a certain level) from the boost demand pressure, the by-pass valve control is switched from an "active" by-pass valve control mode to a "passive" control mode. This passive mode is continued for a relatively short time before the by-pass valve resumes to active mode where the by-pass valve is actively forced open so as to by-pass the high pressure turbocharger compressor. The term "passive" control mode will be explained hereinafter. So in other words, there is an initial ACTIVE mode phase where the by-pass valve is forced shut so that the high pressure compressor/turbo is kept operational and the low pressure turbo becomes operational subsequent to an increase in boost demand, followed by a short PASSIVE stage, and thereafter the by-pass valve is forced open so the high pressure turbo/compressor become non operational.

In the passive control mode, the by-pass valve is controlled such that the only real net ("delta") pressure acting on the valve member 9 is that from the difference (delta P) in pressure between P2 and P21. In other words this delta pressure (P21-P2) is all that controls the actuator (e.g. flap) position. In order to achieve this, in the passive mode the spring force and the vacuum force acting on the diaphragm and thus movable member are made to substantially be equal so as to cancel each other. So where the by-pass valve is the type comprising a spring loaded actuator comprising a chamber/cylinder with a vacuum operated diaphragm (membrane) as described above, the vacuum pressure is set so as to counteract the force of the spring. The vacuum may be controlled by the duty cycle on an electro-pneumatic valve. So looking at the force diagram of figure 4, in the passive mode, the force due the vacuum is set so as to counteract the spring force so there is substantially zero or no significant resultant net force from these on the actuator/movable member (flap) and so the only net force (delta P) acting on it is from the pressure P21 on one side and the P2 pressure on the other side. The term "passive mode" should therefore be interpreted as the above. To recap, in the passive mode, the active by-pass valve is controlled such that substantially only the pressures P21 and P2 are acting on the flap/movable member. So the vacuum force that controls the compressor bypass valve (flap) position in active mode, is made substantially equal to the spring force..

So, in a simple embodiment of the invention, by modulating the power (vacuum) applied to the membrane instead of applying full or no vacuum, the spring force can be compensated such that the position of the bypass valve depends purely on the delta pressure acting on the compressor bypass valve.

So in passive mode the modulation is effectively performed such that the bypass valve stays "barely" closed when there is no delta pressure, the compressor bypass valve will be "pushed" open as soon as the low pressure compressor starts to produce more pressure than the high pressure compressor, and vice versa, as long as the high pressure compressor outlet pressure is higher than the low pressure compressor outlet pressure, the compressor bypass will stay "automatically" closed. This is advantageous in term of operational performance. The modulation of the vacuum can be done by applying a variable duty cycle to the electro-pneumatic valve instead of two discrete values.

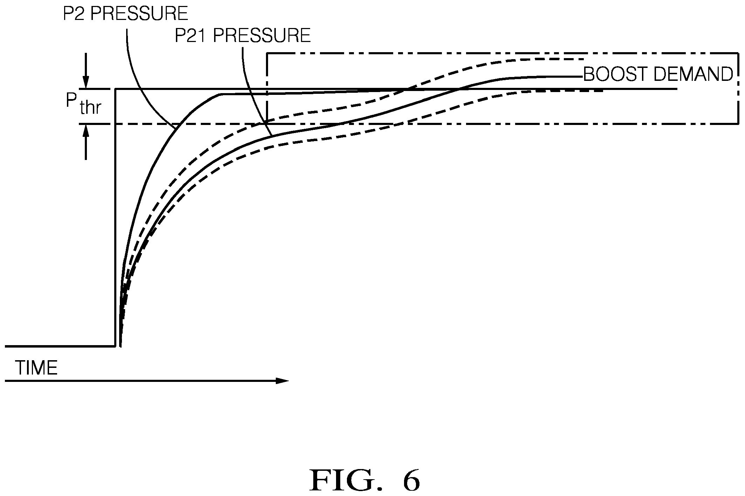

Figure 6 illustrates the region in which the by-pass valve is preferably operated in the passive mode. In one embodiment after the low pressure turbo becomes operational in addition to the high pressure turbo, when the estimated or measured P21 pressure reaches within a threshold amount (Pthr) from the demand pressure, the by-pass valve is switched from active to passive mode. The end time when the by-pass valve is returned to an active mode may be at any appropriate time. For example, it may end when the P21 estimated pressure exceeds the boost demand by a certain amount or it may end over a period which is approximately twice the time for between the time the P21 (measured/estimated) reaches the threshold and when it reaches the demand boost pressure. Alternatively it may be for a pre-set time T, which may also be variable depending on operating conditions.

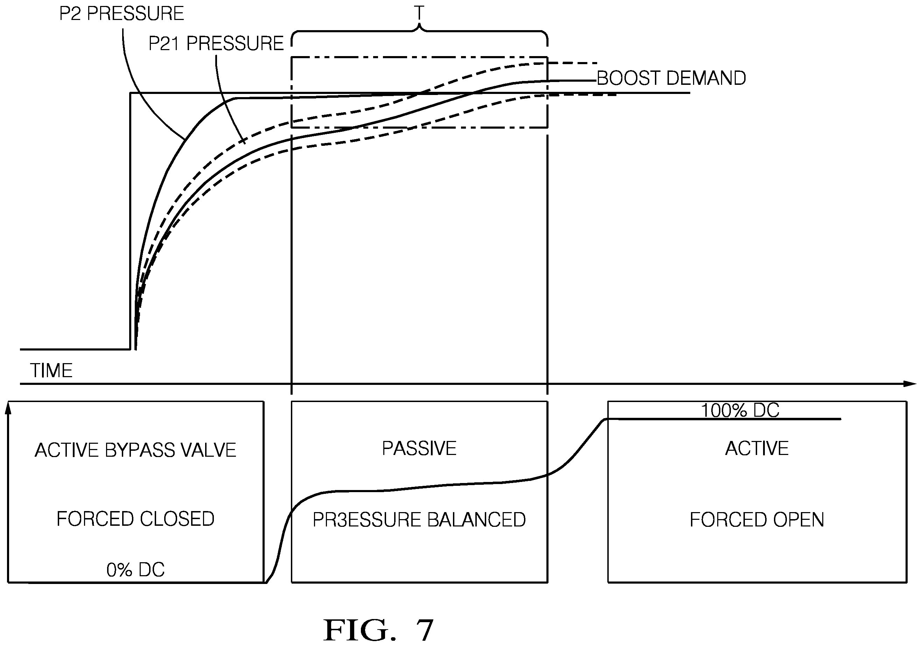

Figure 7 shows the respective active and passive periods. In the 1^{st} period the by-pass valve is forced closed, before being switched to passive operation. After this passive mode, it is switched to active mode operation where the valve is forced open. For a pneumatically operated active by-pass valve, periods of the active/passive operation are controlled by the pressure (e.g. vacuum applied to the diaphragm/piston) via the duty cycle. So the compressor bypass is fully open at 100% duty cycle and closed at 0 % duty cycle.

The "modulation" of the vacuum; i.e. operation in passive mode, is thus only preferably applied in the region of "uncertainty" of the modelled low pressure compressor outlet pressure (P21). In the regions where the model is accurate and when it is certain that P21 is lower than P2, the actuator can be forced closed with the maximum force on the actuator. Vice versa, if it is clear that the low pressure compressor can provide all the necessary boost pressure, the actuator can be forced open with the maximum opening force.

It is to be noted that the technique of operating an active by-pass is not solely applicable to spring/vacuum operated by-pass valves but to any active by-pass valve. For example the by-pass valve may be operated by controlled pressures either side of a diaphragm/membrane/piston in a cylinder or chamber. Again during the passive phase such by-pass valves may be controlled such that the two pressures are substantially equal. The by-pass valve may be a mechanical/electromechanically operated, in a passive mode linkages or mechanically electrically operated actuators may be uncoupled.

Operating an active compressor bypass valve to emulate the behavior of a passive valve makes it possible to minimize the impact of flow pressure compressor outlet pressure model errors on the final boost pressure. Even if the compressor bypass valve is "wrongly" operated, the cancellation of the spring force by the vacuum modulation prevents the valve from moving as the movement is dictated by the real pressures acting on both sides of the valve.

## Claims

1. A method of controlling a by-pass valve (6) in an engine system, said engine system comprising at least a low pressure turbocharger (8) and a high pressure turbocharger (7), said by-pass valve (6) being located between the compressor stages of the low and high pressure turbochargers (7, 8), said by-pass valve (6) including a movable actuator/member (10), arranged so as to selectively divert intake air through, or by-pass, the high pressure compressor stage (7), wherein the by-pass valve (6) comprises a cylinder (11) or chamber, including a movable piston/diaphragm/membrane (13) located therein, which is attached to said movable actuator (10), and urged to a first position by a spring means (12) and to the opposite position by application of pressure or vacuum to said chamber; and wherein the movable actuator/member is controlled by adjusting the pressure/vacuum to provide a force against the spring means (12); wherein in an active mode the actuator/member (10) is controlled so as to forcibly be moved to and from open and closed positions so as to divert said flow in the by-pass valve (6), said method including operating said by-pass valve (6) in a passive mode; **characterized in that**, in the passive mode, the pressure/vacuum applied to said chamber is made to provide a counter force substantially equal to the spring force of the spring means (12) such that the net pressure acting on the movable member (10) being the difference in pressure between the high pressure compressor outlet pressure (P2) and the low pressure compressor outlet pressure (P21); wherein said method includes switching the operation of said by-pass valve (6) from a first active mode phase where the by-pass valve (6) is forced closed, to a second phase where the by-pass valve (6) is operated in said passive mode, and then to a subsequent third phase where the by-pass valve (6) is operated in the active mode where the by-pass valve (6) is forced open.

2. A method as claimed in claims 1 wherein said transition from first active mode phase to said second phase is consequent to the transition from a non-operational to an operational state of the low pressure turbocharger.

3. A method as claimed in claim 1 including switching said by-pass valve from said first active mode phase to said passive mode when a measured or estimated pressure in the intake between the turbochargers reaches a certain value or reaches within a threshold level from the demand boost pressure.

4. A method as claimed in claim 1 wherein said first position is the by-pass valve closed position and said opposite position is the by-pass valve open position.

5. A method as claimed in claim 1 wherein said vacuum is controlled by varying the duty cycle of the applied pressure vacuum.

6. A method as claimed in claim 1 to 5 wherein the by-pass valve is temporarily operated in said passive mode phase and switched back to active mode operation.

## Patentansprüche

1. Verfahren zum Steuern eines Bypassventils (6) in einem Motorsystem, wobei das Motorsystem zumindest einen Niederdruck-Turbolader (8) und einen Hochdruck-Turbolader (7) aufweist, wobei das Bypassventil (6) zwischen den Verdichterstufen der Niederdruck- und Hochdruck-Turbolader (7, 8) angeordnet ist, wobei das Bypassventil (6) ein(en) bewegbaren/s Aktuator/Element (10) umfasst, der/das angeordnet ist zum selektiven Umleiten von Ansaugluft durch, oder Umgehen, die Hochdruckverdichterstufe (7), wobei das Bypassventil (6) einen Zylinder (11) oder eine Kammer aufweist, einschließlich eines/einer darin angeordneten bewegbaren Kolbens/Blende/Membran (13), der/die an dem bewegbaren Aktuator (10) befestigt ist und durch ein Federmittel (12) in eine erste Position und in die entgegengesetzte Position durch Anwendung von Druck oder Vakuum auf die Kammer beeinflusst wird; und
wobei der/das bewegbare Aktuator/Element durch Anpassen des Drucks/Vakuums gesteuert wird, um eine Kraft gegen das Federmittel (12) vorzusehen;
wobei in einem aktiven Modus der/das Aktuator/Element (10) gesteuert wird derart, um zwangsweise in und aus offenen und geschlossenen Positionen bewegt zu werden, um die Strömung in dem Bypassventil (6) umzulenken, wobei das Verfahren ein Betreiben des Bypassventils (6) in einem passiven Modus aufweist;
**dadurch gekennzeichnet, dass**
in dem passiven Modus der/das auf die Kammer angewendete Druck/Vakuum eine Gegenkraft vorsehen soll, die im Wesentlichen gleich zu der Federkraft des Federmittels (12) ist, derart, dass der Nettodruck, der auf das bewegbare Element (10) wirkt, die Druckdifferenz zwischen dem Hochdruckverdichterauslassdruck (P2) und dem Niederdruckverdichterauslassdruck (P21) ist; wobei das Verfahren umfasst ein Umschalten des Betriebs des Bypassventils (6) von einer ersten aktiven Modusphase, in der das Bypassventil (6) zwangsweise geschlossen wird, zu einer zweiten Phase, in der das Bypassventil (6) in dem passiven Modus betrieben wird, und dann zu einer nachfolgenden dritten Phase, in der das Bypassventil (6) in dem aktiven Modus betrieben wird, in dem das Bypassventil (6) zwangsweise geöffnet wird.

2. Ein Verfahren gemäß Anspruch 1, wobei der Übergang von der ersten aktiven Modusphase zu der zweiten Phase nachfolgend auf den Übergang von einem Nichtbetriebszustand zu einem Betriebszustand des Niederdruck-Turboladers ist.

3. Ein Verfahren gemäß Anspruch 1, das ein Schalten des Bypassventils von der ersten aktiven Modusphase zu dem passiven Modus umfasst, wenn ein gemessener oder geschätzter Druck in dem Einlass zwischen den Turboladern einen bestimmten Wert erreicht oder eine Nähe eines Schwellenwerts von dem Bedarfsladedruck erreicht.

4. Ein Verfahren gemäß Anspruch 1, wobei die erste Position die geschlossene Position des Bypassventils ist und die entgegengesetzte Position die offene Position des Bypassventils ist.

5. Ein Verfahren gemäß Anspruch 1, wobei das Vakuum durch ein Variieren des Arbeitszyklus des angewendeten Druckvakuums gesteuert wird.

6. Ein Verfahren gemäß Anspruch 1 bis 5, wobei das Bypassventil vorübergehend in der passiven Modusphase betrieben wird und in den Betrieb des aktiven Modus zurückgeschaltet wird.

## Revendications

1. Procédé pour commander un clapet de by-pass (6) dans un système moteur, ledit système moteur comprenant au moins un turbocompresseur à basse pression (8) et un turbocompresseur à haute pression (7), ledit clapet de by-pass (6) étant placé entre les étages de compresseur du turbocompresseur à basse pression et du turbocompresseur à haute pression (7, 8),
ledit clapet de by-pass (6) incluant un actionneur/élément déplaçable (10), agencé de manière à dériver sélectivement l'air admis soit en traversant soit en bypassant l'étage de compresseur à haute pression (7),
dans lequel le clapet de by-pass (6) comprend un cylindre (11) ou une chambre, incluant un piston/diaphragme/membrane déplaçable (13) situé à l'intérieur, qui est attaché audit actionneur déplaçable (10), et forcé à une première position par un moyen à ressort (12) et vers la position opposée par application de pression ou de vide à ladite chambre ; et
dans lequel l'actionneur/élément déplaçable est commandé en ajustant la pression/vide pour appliquer une force contre le moyen à ressort (12) ;
dans lequel, dans un mode actif, l'actionneur/élément (10) et commandé de manière à être déplacé à force vers des positions ouverte et fermée de manière à dériver l'écoulement dans le clapet de by-pass (6),
ledit procédé incluant de faire fonctionner ledit clapet de by-pass (6) dans un mode passif ;
**caractérisé en ce que**, dans le mode passif, la pression/vide appliquée à ladite chambre est établie pour appliquer une force antagoniste sensiblement égale à la force élastique du moyen à ressort (12), de telle façon que la pression nette agissant sur l'élément déplaçable (10) est la différence de pression entre la pression de sortie du compresseur à haute pression (P2) et la pression de sortie du compresseur à basse pression (P21) ;
dans lequel ledit procédé inclut l'opération consistant à commuter le fonctionnement dudit clapet de by-pass (6) depuis une phase en mode actif dans laquelle le clapet de by-pass (6) est forcé à la fermeture, vers une seconde phase dans laquelle le clapet de by-pass (6) est amené à fonctionner dans ledit mode passif, puis à une troisième phase ultérieure dans laquelle le clapet de by-pass (6) est amené à fonctionner dans le mode actif dans lequel le clapet de by-pass (6) est forcé à l'ouverture.

2. Procédé selon la revendication 1, dans lequel ladite transition depuis la première phase en mode actif vers ladite seconde phase est une conséquence de la transition depuis un état non fonctionnel vers un état fonctionnel du turbocompresseur à basse pression.

3. Procédé selon la revendication 1, incluant l'opération consistant à commuter ledit clapet de by-pass depuis ladite première phase en mode actif vers ledit mode passif quand une pression mesurée ou estimée dans l'admission entre les turbocompresseurs atteint une certaine valeur ou atteint un niveau seuil depuis la pression de suralimentation demandée.

4. Procédé selon la revendication 1, dans lequel ladite première position est une position dans laquelle le clapet de by-pass est fermé et ladite position opposée est la position dans laquelle le clapet de by-pass est ouvert.

5. Procédé selon la revendication 1, dans lequel ledit vide est commandé en faisant varier le cycle de service du vide appliqué.

6. Procédé selon les revendications 1 à 5, dans lequel le clapet de by-pass est temporairement amené à fonctionner dans ladite phase en mode passif et est commuté en retour vers le fonctionnement en mode actif.
